Europäisches Patentamt

European Patent Office

Office européen des brevets

(11) Publication number: **0 082 101**
A2

(12) **EUROPEAN PATENT APPLICATION**

(21) Application number: **82630116.0**

(22) Date of filing: **10.12.82**

(51) Int. Cl.³: **F 03 G 7/00**

(30) Priority: **11.12.81 IL 64518**
**08.02.82 IL 64949**
**18.04.82 IL 65518**

(43) Date of publication of application: **22.06.83**
**Bulletin 83/25**

(84) Designated Contracting States: **AT BE CH DE FR GB IT LI LU NL SE**

(71) Applicant: **Feinblum, Ephraim, Rehov Uziel 14/31, Beer Sheba (IL)**

(72) Inventor: **Feinblum, Ephraim, Rehov Uziel 14/31, Beer Sheba (IL)**
Inventor: **Kiderman, Alexander, Kfar Alumim Doar Na, Bikat Jericho (IL)**

(74) Representative: **Waxweiler, Jean et al, OFFICE DENNEMEYER S.à.r.l. 21-25 Allée Scheffer P.O.Box 41, Luxembourg (LU)**

(54) **Apparatus and method for using low grade energy source.**

(57) Apparatus for utilizing low grade energy sources comprising a working fluid and a low boiling point fluid, apparatus for transmitting heat to at least one of the working fluid and the low boiling point fluid from a low grade energy source, work pressure generating apparatus for providing a pressurized flow of working fluid by vaporization of the low boiling point fluid, fluid driven machine apparatus for producing a useful energy output, a fluid flow pathway extending from the work pressure generating apparatus to the fluid driven machine apparatus, valve apparatus operative to govern the supply of the pressurized flow of working fluid to the fluid flow pathway in a pulsed mode of operation and apparatus for condensing the low boiling point fluid including first apparatus for condensing a first portion of the low boiling point fluid and second apparatus for contacting the first portion of the low boiling point fluid after condensation thereof with a second portion of the low boiling point fluid.

APPARATUS AND METHOD FOR UTILIZING LOW GRADE ENERGY SOURCE.

The present invention relates to techniques for utilization of low grade energy generally and more particularly to apparatus and a method for utilizing low grade energy.

There presently exist large amounts of low grade energy which are not presently used due to their low grade nature. These include, for example, solar energy, waste heat from combustion of fossil fuels, waste heat from the cooling water of an atomic power plant and temperature gradients occurring in bodies of water such as oceans.

It has been proposed to employ a working fluid which has been heated by a low grade energy source, such as solar energy, and a low boiling point liquid to produce vaporization and expansion of the low boiling point liquid and subsequent driving of the working fluid through a turbine or similar device for producing useful mechanical power. Examples of proposed systems of this type appear in U.S. Patents 4,209,982, 3,608,311 and 3,901,033.

U.S. Patent 4,209,982 provides a low temperature fluid energy conversion system which employs heat exchange means coupled through first and second cylinders for heating the working fluid.

U.S. Patent 3,608,311 provides an engine which defines hot and cold sections in at least two chambers and provides hot and cold lines communicating therebetween. U.S. Patent 3,901,033 provides a vapor pressurized hydrostatic drive employing first and second motor means.

Additional U.S. Patent references which show related energy conversion systems include the following: 3,956,895, 3,987,629, 4,006,595, 4,120,158, 4,134,265, 4,148,195, 4,195,481, and 4,319,458 as well as U.K. Patent 4,204,119.

In accordance with an embodiment of the present invention, there is provided apparatus for utilizing low grade energy sources comprising a working fluid and a low boiling point fluid, means for transmitting heat to at least one of the working fluid and the low boiling point fluid from a low grade energy source, work pressure generating means for providing a pressurized flow of working fluid by vaporization of the low boiling point fluid, fluid driven machine means for producing a useful energy output, a fluid flow pathway extending from the work pressure generating means to the fluid driven machine means, valve means operative to govern the supply of the pressurized flow of working fluid to the fluid flow pathway in a pulsed mode of operation and means for condensing the low boiling point fluid including first means for condensing a first portion of the low boiling point fluid and second means for contacting the first portion of the low boiling point fluid after condensation thereof with a second portion of the low boiling point fluid.

Further in accordance with an embodiment of the present invention, the relatively high temperature condensate of the second portion of the low boiling point fluid may be used to condense a third portion of the low boiling point fluid and so on.

Further in accordance with an embodiment of the present invention, the apparatus for transmitting heat is operative to heat the low boiling point fluid and the work pressure generating apparatus comprises means for supplying the low boiling point fluid in a vaporized state to the working fluid.

In accordance with an alternative embodiment of the present invention, the apparatus for transmitting heat is operative to heat the working fluid and the work pressure generating apparatus comprises means for supplying the low boiling point fluid in a liquid state to the heated working fluid.

Further in accordance with an embodiment of the present invention, there are provided a plurality of fluid flow pathways, each associated with heat transmitting apparatus and work pressure generating apparatus and operated in pulsed, discontinuous mutually out of phase sequence. According to a preferred embodiment of the invention, a sufficient number of fluid flow pathways are operated such that a substantially continuous flow of working fluid engages the turbine apparatus for uniform and continuous operation thereof.

Still further in accordance with an embodiment of the present invention, the work pressure generating apparatus comprises a chamber including a first inlet for vaporizable fluid, a second inlet for working fluid, a first outlet for vaporizable fluid and a second outlet for working fluid and the valve apparatus comprises fluid supply control apparatus governing the open/closed status of the first and second inlets and outlets as well as pump apparatus, whereby vaporizable fluid is supplied to the chamber sufficiently to displace part but not all of the working fluid therefrom, the first inlet then being closed, the pump apparatus then pumping the remaining working fluid from the chamber, causing further expansion of the vaporizable fluid, absorbing the latent heat.

The present invention will be more fully understood and appreciated from the following detailed description taken in conjunction with the drawings in which:

Fig. 1 is a schematic illustration of apparatus for utilizing low grade energy constructed and operative in accordance with an embodiment of the present invention;

Fig. 2 is a schematic illustration of apparatus for utilizing low grade energy constructed and operative in accordance with an alternative embodiment of the present invention;

Fig. 3 is a diagram illustrating the pressurization of the working fluid as a function of time in accordance with an embodiment of the present invention;

Figs. 4 - 6 are illustrations of various alternative embodiments of apparatus shown in Figs. 1 and 2;

Fig. 7 is a schematic illustration of multistage apparatus for utilizing low grade energy constructed and operative in accordance with an embodiment of the present invention;

Fig. 8 is a schematic illustration of apparatus for utilizing low grade energy constructed and operative in accordance with an embodiment of the present inven-

- 4 -

tion and including hydraulic apparatus for producing useful work from the flow of the working fluid and turbine apparatus for producing useful work from the pressurized vaporizable fluid;

Fig. 9 is a schematic illustration of apparatus for utilizing low grade energy employing pump apparatus to enhance the energy efficiency thereof;

Fig. 10 is a schematic illustration of apparatus for utilizing low grade energy employing pump apparatus downstream of the fluid driven machine apparatus for enhancing the pressure drop thereacross; and

Fig. 11 is a schematic illustration of a preferred embodiment of the present invention.

The present invention will now be described with reference to the drawings, it being appreciated that the various drawings each show one or more features or aspects of the invention, without necessarily showing all of the features of the invention. Each drawing is provided to specifically illustrate one or more of such features and is not to be taken to limit the invention to the particular configuration there illustrated.

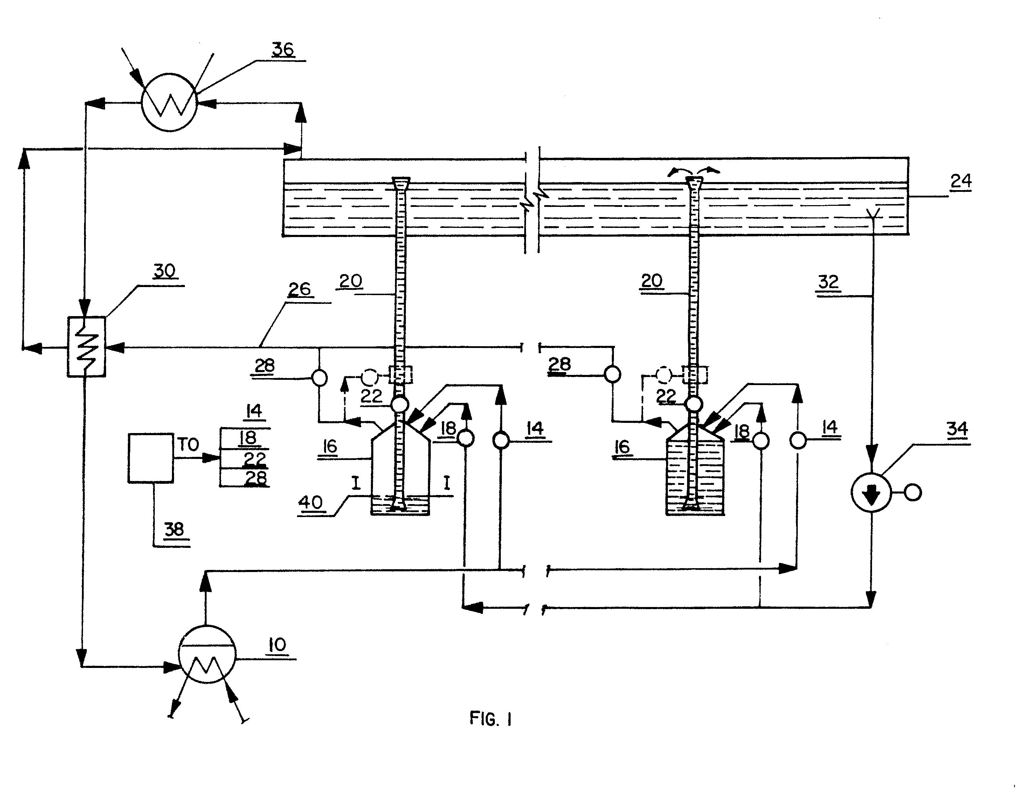

Reference is now made to Fig. 1 which illustrates apparatus for utilizing low grade energy constructed and operative in accordance with an embodiment of the present invention and including an evaporator 10 which receives a supply of a fluid having a low boiling point, such as FREON R. The fluid having a low boiling point may also comprise water or other fluid which may be combined with FREON. The evaporator 10 is operated by a low grade energy source. According to one preferred embodiment of the invention the evaporator 10 is operated by an ordinary solar collector. According to an alternative embodiment of the invention, the evaporator may be heated by means of a conventional heat exchanger communicating with a fluid heat source such as warm ocean waters, exhaust gases from combustion of fossil fuels, cooling water from atomic power plants or the like.

The vaporized fluid from evaporator 10 is supplied via suitable conduits 12 and via valves 14 to

0082101

- 5 -

a plurality of work pressure vessels 16. In the illustration of Fig. 1 only two work pressure vessels and associated valves are shown, it being appreciated that any desired number of such vessels may be employed. If desired, only a single such vessel and associated valves may be provided. Work pressure vessels 16 typically comprise sealed tanks of pressure resistant construction.

Each of work pressure vessels 16 also receives, via a valve 18 a supply of a working fluid. The working fluid is typically water or a water based solution or any solution which is insoluble or not very soluble with the low boiling point fluid employed. Each of the work pressure vessels 16 communicates with a fluid flow pathway 20, typically in the form of a vertically extending conduit which communicates via a valve 22 from the bottom interior portion of work pressure vessel 16 to a reservoir 24 lying above the work pressure vessel by a predetermined height. Each of the work pressure vessels is also provided with a vapor outlet 26 which extends via a valve 28 and a heat exchanger 30 to reservoir 24 and then to condensor 36.

According to an alternative embodiment of the invention, conduit 26 extends from the work pressure vessel via valve 28 and into communication with pathway 20 at a height slightly above the top of work pressure vessel 16 and valve 22.

A working fluid drop conduit 32 extends from reservoir 24 downward into supply engagement with fluid driven machine means 34, which converts the kinetic energy of the falling working fluid to mechanical or electrical power. The working fluid continues from fluid driven machine means 34 via conduit 32 to fill work pressure vessels 16. Vapor of the low boiling point fluid from reservoir 24 is supplied to a condenser 36 which may operate on a readily available source of cooled fluid, such as the outside air. The condensate of the low boiling point fluid is supplied via condensate outlet conduit 37 to heat exchanger 30, where it is partially heated, and then to evaporator 10. Valves 14, 18, 22 and 28 are operated by control circuitry 38 which is responsive to time and/or various inputs such as the liquid level or pressure in vessel 126 measured by a detector 40.

The operation of the apparatus of Fig. 1 will now be described briefly. It is a particular feature of the present invention that the valves 14, 18, 22 and 28 are operated in a predetermined sequence so as to provide a predetermined sequence discontinuous impulsed supply of pressurized working fluid to each fluid flow pathway 20. It is a further particular feature of the present invention that the valves 14, 18, 22 and 28 associated with each work pressure vessel 16 are mutually out of phase. The impulsed nature of the supply of working fluid under pressure to the fluid flow pathway is of particular importance since it provides upwards driving of the working fluid on a one to one basis as a function of volume of vapor supplied to the work pressure vessel. Thus the impulse operation and structure provides significantly enhanced efficiency.

In practice, a work pressure vessel 16 and the fluid flow pathway 20 associated therewith are filled with working fluid and valve 14, 18, 22 and 28 are then closed. Valves 14 and 22 are then opened and the vaporized low boiling point fluid from evaporator 10 is supplied to vessel 16 and forces the working fluid from the vessel 16 upwardly along the fluid flow pathway into the reservoir 24. When the level of working fluid in the vessel 16 falls below a predetermined threshold defined by detector 40, valves 14 and 22 are closed and vavles 18 and 28 are opened. The vaporized low boiling point fluid from vessel 16 is supplied via conduit 26 and heat exchanger 30 to reservoir 24 and thence to condenser 36. At the same time, the vessel 16 is filled by working fluid received from the fluid driven machine means 34 via opened valve 18. According to the alternative embodiment of conduit 26, the vapor is supplied directly to pathway 20 beyond valve 22.

According to an alternative embodiment of the present invention, the working fluid may be a liquid conductor. In such a case, the fluid driven machine means 34 may comprise means for generating electricity from movement of the liquid conductor.

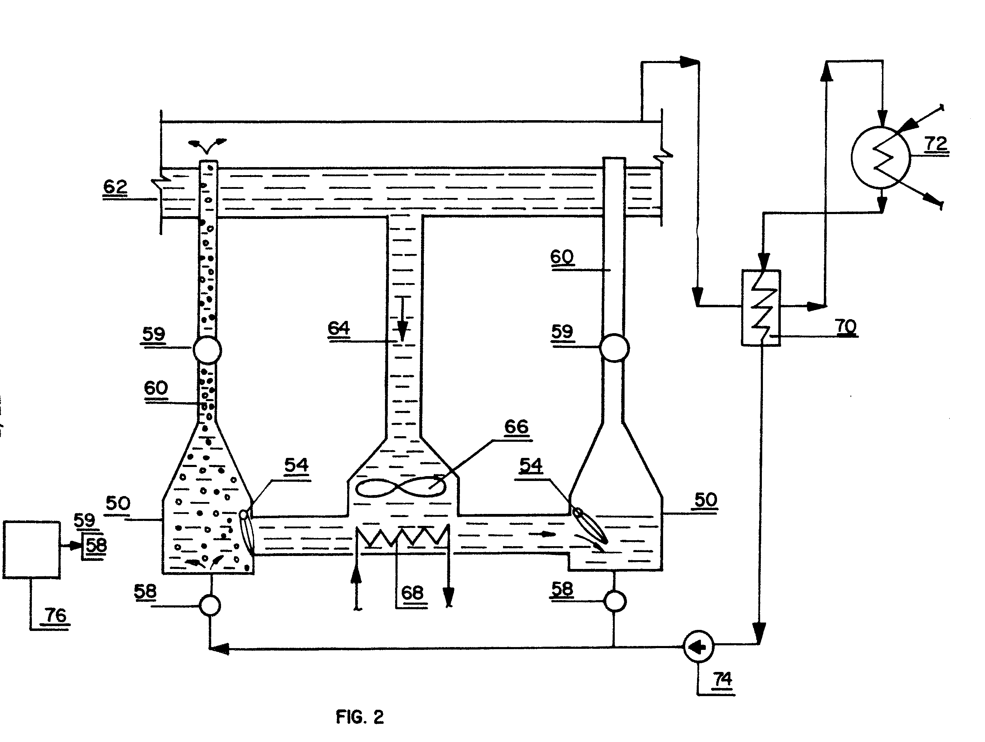

Reference is now made to Fig. 2 which illustrates an alternative embodiment of apparatus for utilizing low grade energy wherein the working fluid is heated by a low grade energy source. The apparatus of Fig. 2 comprises a plurality of work pressure vessels 50, of which two are illustrated in the drawing, it being appreciated that additional vessels or only a single vessel may be employed as desired.

Each work pressure vessel 50 has a working fluid inlet 52 governed by a valve 54 and a low boiling point fluid inlet 56 governed by a valve 58. Each work pressure vessel 50 communicates via a valve 59 with a fluid flow pathway 60 which extends upwardly into communication with a reservoir 62, which is connected in common to the fluid flow pathways associated with each of the work pressure vessels.

According to an alternative embodiment of the invention, a single common fluid flow pathway (not shown) is coupled to a plurality of work pressure vessels 50.

Extending downwardly from the reservoir 62 is a working fluid drop conduit 64 which communicates with a supply input to a fluid driven machine means 66 which is operative to convert the kinetic energy of the falling working fluid to mechanical work or electricity as desired. The working fluid after having passed through the hydraulic machine means 66 is heated by means of a low grade energy source, by means of a heat exchanger coil 68 or in any other suitable way. The types of low grade energy sources have been described hereinabove in connection with the embodiment of Fig. 1.

Low boiling point fluid in a vapor state from the reservoir 62 is supplied via a heat exchanger 70 for preliminary cooling thereof to a condenser 72. The

- 8 -

condensate is supplied via a pump 74 and via valves 58 to the work pressure vessels 50.

Similarly to the operation of the apparatus of Fig. 1, the apparatus of Fig. 2 operates in an impulse mode. Here, however, the working fluid is heated and supplied to the work pressure vessel 50 while valves 58 and 59 are closed. Valve 58 is then opened and low boiling point fluid in a liquid state is pumped into vessel 50. The thermal interaction between the heated working fluid and the low boiling point fluid, vaporized the low boiling point fluid, producing a pressure buildup in vessel 50. When the pressure reaches a predetermined threshold level, valve 59 is opened and the low boiling point liquid is intensively evaporated. The pressure generated in vessel 50 forces the two phase gas and liquid mixture upwards through fluid flow pathway 60 into reservoir 62. Valves 58 and 59 are then closed and valve 54 is opened to fill vessel 50 with the working fluid.

Similarly to the operation of the apparatus of Fig. 1, the various valves are connected to control circuitry 76 which governs the operation in accordance with a preset timetable and/or in response to the pressure in the work pressure vessel 50, which may be sensed by a suitable detector. Each of the plurality of work pressure vessels is operated in an impulse providing mode, such that valve 59 is opened only a predetermined , relatively small percentage of the total operating cycle. The individual work pressure vessels and their respective valves 59 are operated in a mutually out of phase relationship, similarly to the arrangement described hereinabove in connection with Fig. 1.

It may be appreciated that the various valves may be controlled by the control circuitry in response to the level of liquid in a vessel, temperature or any other suitable parameter or combination of parameters which reflects operating conditions in the vessel.

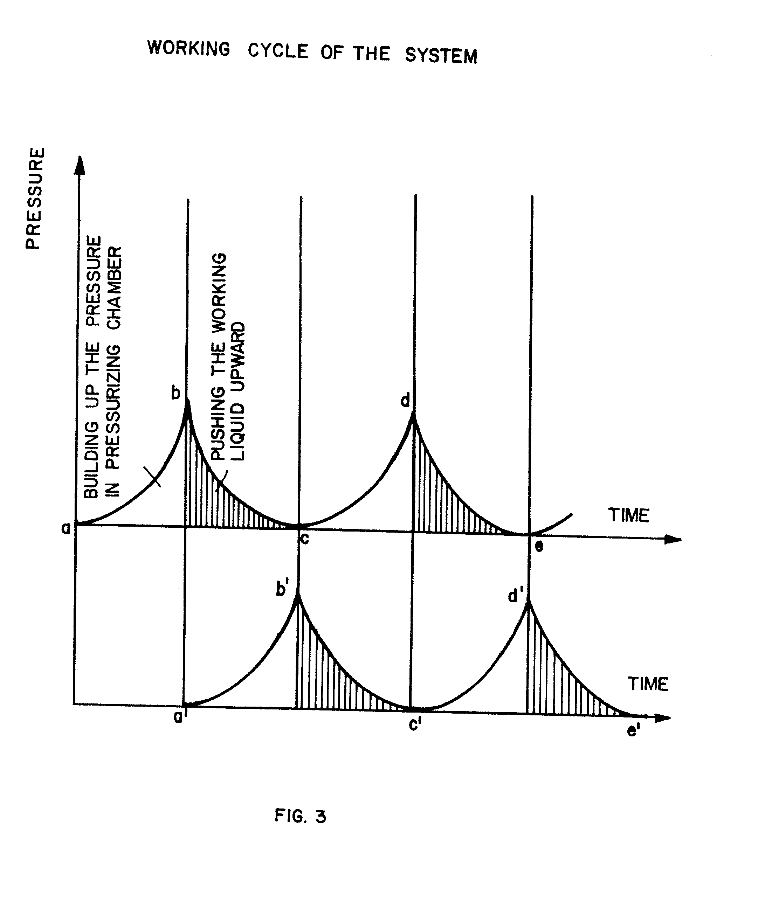

In Fig. 3 there is provided a pressure/time diagram illustrating the cycling of the pressurization of the two vessels of Figs. 1 and 2, here identified as vessels A and B, in accordance with a preferred embodiment of the invention. It has been determined that operation in such a mode with such a structure is effective in reducing the slip coefficient between the gas phase low boiling point fluid and the working fluid to between 1.0 and 1.1.

It is noted that in the apparatus of Fig. 2, when valve 58 is opened, initial pressurization of the work pressure vessel 50 occurs and a temporary equilibrium is attained while some of the low boiling point fluid still remains in the liquid state. Upon opening of valve 59 with attendant release of the pressure in vessel 50, vaporization of the remaining low boiling point fluid takes place for enhanced driving of the working fluid through pathway 60.

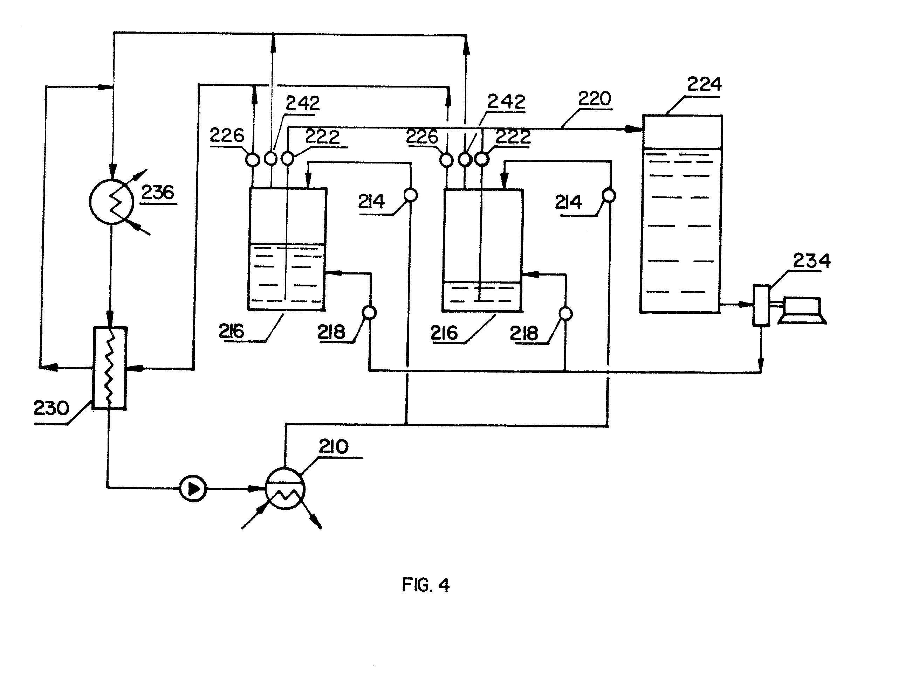

Reference is now made to Fig. 4 which illustrates a further alternative variation of the embodiment of Fig. 1. Here the raised reservoir 24 of Fig. 1 is replaced with a working fluid reservoir 224 under pressure communicating directly with fluid driven machine means 234. It may be appreciated that passageway 20 in the embodiment of Fig. 4, which corresponds to passageway 20 in the embodiment of Fig. 1, may be horizontal instead of vertical.

The remainder of the system is essentially identical in structure and operation to the system illustrated in Fig. 1 and described in connection therewith, it being noted that corresponding elements in Fig. 4 are indicated by the same reference numerals used in Fig. 1 with the addition of 2 as a first digit.

The structure of Fig. 4 has a particular advantage in that the cost and inconvenience of a raised reservoir 24 is eliminated by the use of reservoir 224.

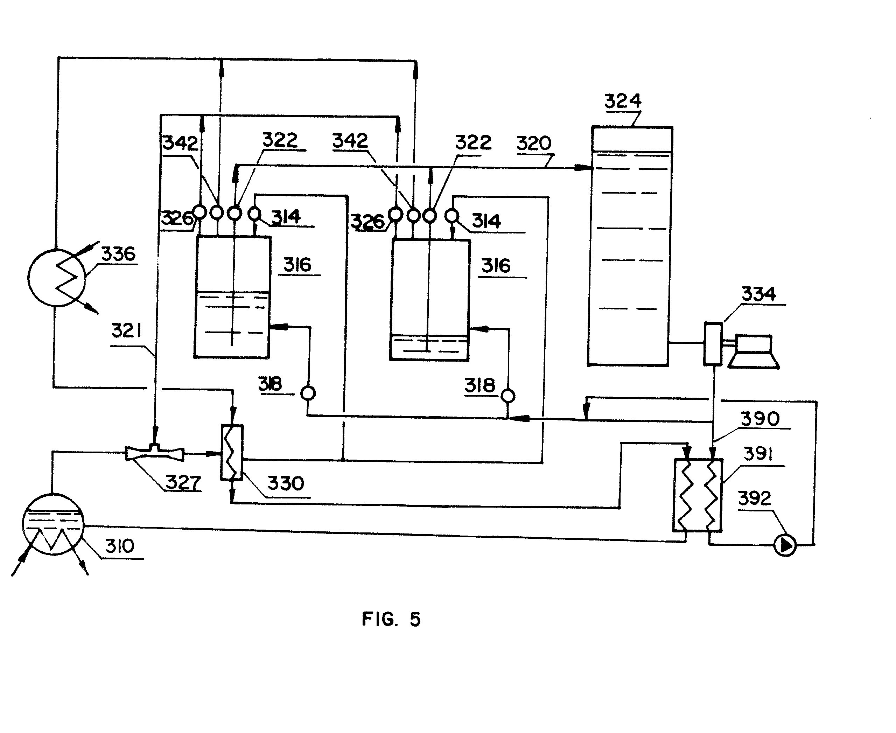

Reference is now made to Fig. 5 which illustrates a variation of the structure of Fig. 4 described above. As contrasted with the embodiment of Fig. 4, the structure of Fig. 5 includes an ejector 327 which receives a part of the low boiling point vapor from the work pressure vessel 316 via a conduit 321. Ejector 327 operates as thermocompressor which receives a driving flow input of low boiling point vapor from evaporator 310, which vapor is

- 10 -

superheated in the ejector 327. The superheated vapor is then supplied to the condensate heater 330 in which it loses heat and is then supplied to the work pressure vessel 316.

To cool the work fluid outflows from the fluid driven machine means, heat exchanger 391 is used and then the fluid is pumped by pump 392 to work pressure vessel 316. The heat exchanger 391 heats the low boiling point fluid condensate.

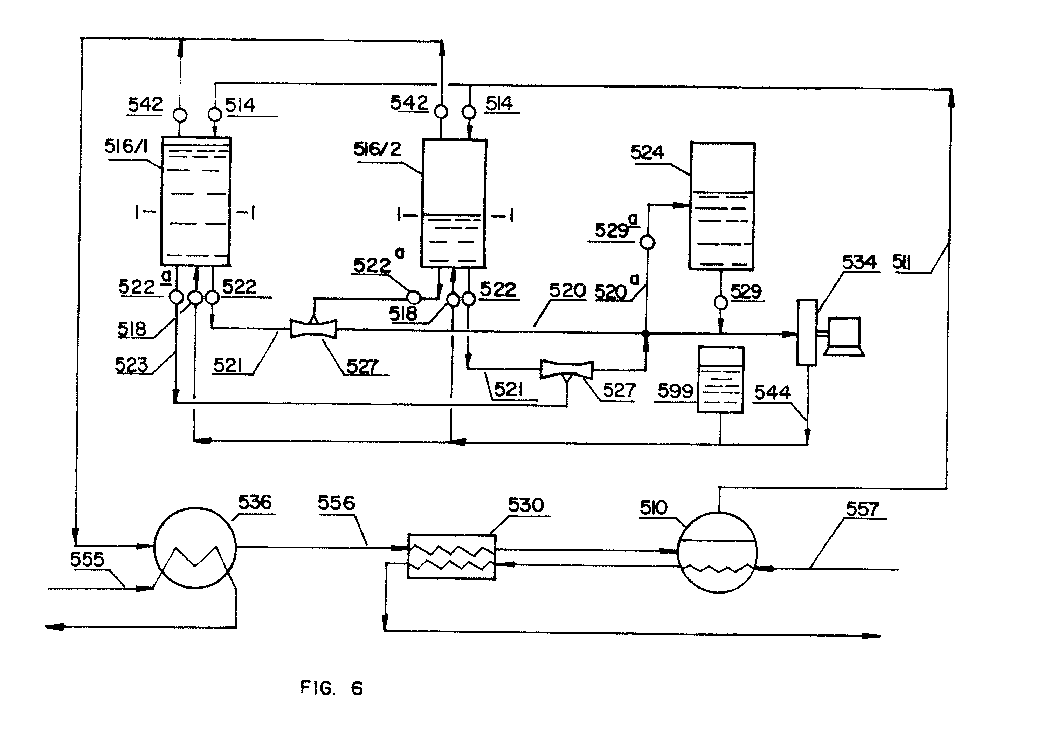

Reference is now made to Fig. 6 which illustrates apparatus for enhancing the use of the residual vapor pressure of the low boiling point fluid remaining in the work pressure vessel. The apparatus of Fig. 6 comprises first and second work pressure vessels 516 and 517, although it is appreciated that any desired and suitable number of work pressure vessels may be employed. Work pressure vessels 516 and 517 receice a supply of working fluid via a conduit 544 and valves 518. The work pressure vessels 516 and 517 also receive a pressurized flow of low boiling point fluid vapors from an evaporator 510 via a conduit 511 and valves 514. A low boiling point fluid vapor outlet from work pressure vessels 516 and 517 is provided via valves 542 and a conduit 533 to the inlet of a condenser 536 which receives a flow of cooling fluid via a conduit 555. The condensed low boiling point fluid is supplied via a conduit 556 to a first stage heater 530 and thence to an evaporator 510. A flow of heated fluid, preferably from a solar or other waste heat source, is supplied first to evaporator 510 and thence to heater 530 via a conduit 557.

Work pressure vessel 517 provides a pressurized output of working fluid via a valve 522a and a conduit 523 to the suction inlet of an ejector 527, which receives as its driving input a pressurized working fluid output from work pressure vessel 516 via a valve 522. A second ejector 528 receives its driving input via a conduit 521 and a valve 522 from work pressure vessel 517 and its suction input via a valve 522a from work pressure vessel 516.

- 11 -

The outputs of ejectors 527 are supplied as a pressure input to fluid driven machine means 534 for driving thereof. The outflow of fluid driven machine means 534 is supplied via conduit 544 to the work pressure vessel. A portion of the output of ejector 528 is also supplied via a conduit 520a and a valve 529a to a pressure maintaining reservoir 524 whose outlet is connected via a valve 529 to the inlet to fluid driven machine means 534 to smooth the pressure pulses.

The operation of the apparatus of Fig. 6 will now be described briefly. Work pressure vessel 516 is filled with working fluid and valves 514, 522, 522a and 542 are closed. Next valves 514 and 522a are opened in association with work pressure vessel 516 and valve 522a is opened in association with work pressure vessel 517.

Ejectors 527 and 528 may alternatively be replaced by pumps such as electrically driven pumps.

Low boiling point fluid vapors are supplied from evaporator 510 via conduit 511 and valve 514 to work pressure vessel 516, thus forcing the working fluid out through valve 522 and through ejector 527, thus drawing the remaining working fluid from work pressure vessel 517 via valve 522a. The working fluid level in work pressure vessel 517 is consequently reduced and the vapor pressure therein lowered to the vapor pressure in the condenser 536.

The level of the working liquid in work pressure vessel 516 falls to a level 1 - 1 indicated on the drawings (the level shown in work pressure vessel 517).

As noted above, the working fluid output from ejector 527 is supplied to the fluid driven machine means 534 for operating thereof.

In order to smooth the pressure pulses in conduit 520 leading to the input of the fluid driven machine means and to produce a generally continuous pressurized flow, pressure maintaining reservoir 524 is provided with automatically operative valves 529 and 529a, which provide a constant pressure output at the input to fluid driven machine means 534. At the output of machine means

- 12 -

534 there is provided an additional reservoir 599 in order to smooth out the pulses in the flow of working fluid.

The remainder of the operating cycle of the apparatus of Fig. 6 is generally similar to that already described hereinabove in connection with Figs. 1 - 5 and for the sake of conciseness will not be repeated here.

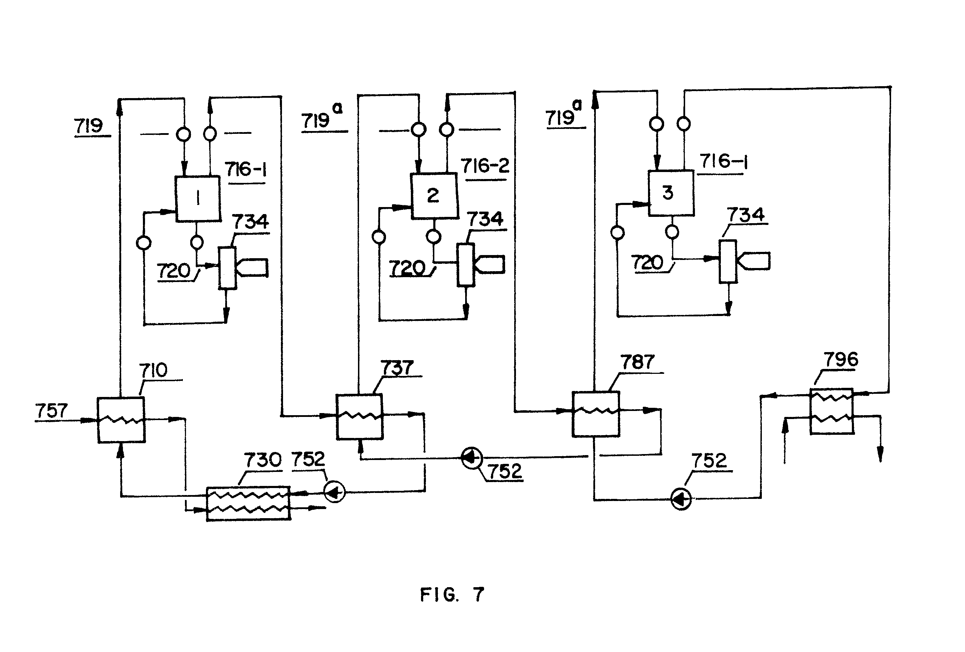

Reference is now made to Fig. 7 which illustrates an apparatus comprising several stages for producing useful energy from low grade energy sources. Each individual stage, identified by reference numerals 1, 2, 3 may be identical to any of the various embodiments of apparatus illustrated in Figs. 1 - 6 hereinabove with the following addition: the condenser, here illustrated at reference numeral 737, condenses the vapors from the first stage work pressure vessel 716-1 by heating and evaporating the condensate of low boiling point fluid at a lower temperature from another stage. The vapors are supplied to the work pressure vessel 716-2 forming part of the second stage. Similarly, the second stage 716-2 employs the condenser 787 for heating and evaporation of the condensate of another low boiling point fluid supplied from the third work pressure vessel 716-3. Additional stages may be added in a similar manner. The condenser 796 of the final stage may receive a cooling fluid input from any suitable source of fluid.

It is appreciated that the various stages may use the same or different low boiling point fluids. For example, when the same low boiling point fluid is used in a plurality of stages, the pressure at each succeeding stage is less than at each preceeding stage. Thus the operating pressure in the evaporator 710 may typically be equal to the pressure in the first stage, while the pressure in the condenser/evaporator 737 may be lower and the pressure in the condenser/evaporator 787 may be the lowest.

Alternatively, a number of low boiling point fluids, each having a different boiling point, may be utilized, one in each stage.

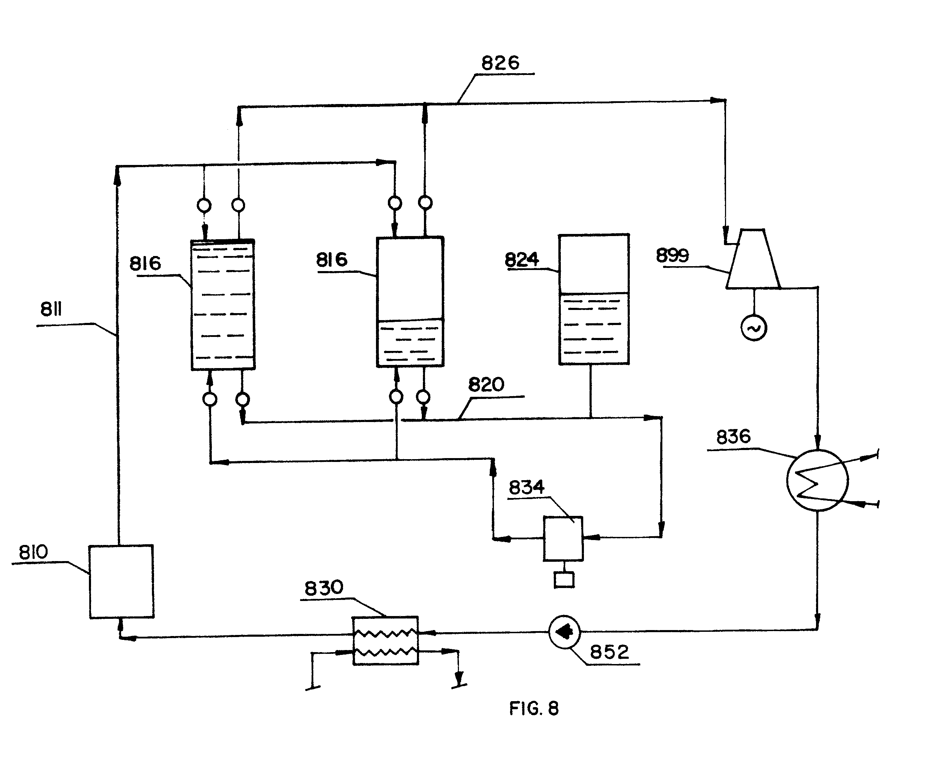

Reference is now made to Fig. 8 which illustrates an alternative embodiment of the present invention wherein useful work is provided by two generators, one operated by the working fluid and the other operated by the vapor of the vaporizable fluid. It is noted at the outset that the vaporizable fluid, may be a low boiling point fluid such as that described hereinabove in connection with the embodiment of Figs. 1-7, or alternatively a fluid such as water. The working fluid may be any suitable fluid and may comprise a liquid conductor, such as mercury. Similarly, it is appreciated that in any of the embodiments of Figs. 1-7, the low boiling point fluid may be replaced by any other suitable vaporizable fluid.

The apparatus of Fig. 8 is generally similar to that illustrated in Fig. 4 and comprises an evaporator 810 operated by a low grade energy source which vaporizes a vaporizable fluid, such as water or a low boiling point fluid. The vaporized fluid is supplied along a conduit 811 and via respective valves 814 to respective work pressure vessels 816. A working fluid, such as water, a liquid conductor, or any other suitable working fluid, is supplied to the work pressure vessels via respective valves 818. Contact between the vaporizable fluid and the working fluid produces a pressure buildup in the pressure vessels 816 which causes the working fluid to be forced out of the work pressure vessels 816 via valves 822 and a conduit 820 to be supplied as necessary to a pressure reservoir 824. The working fluid communicates with a fluid driven machine 834, typically in the form of a hydraulic motor or an MHD generator for producing electricity or any other suitable form of useful work.

Vapors of the vaporizable fluid are supplied via respective valves 828 to a conduit 826 which communicates with a vapor turbine 899, such as a condensing or backpressure turbine for driving thereof and producing electricity or any other form of useful work. The output from turbine 899 is supplied to a condenser 836 and is then circulated as by means of a pump 852 via a heat exchanger 830 for initial heating and thence to evaporator 810.

It is noted that the apparatus of Fig. 8 is suitable also for use with high grade energy sources to produce superheated vapors which are supplied to vapor turbine 899. In such an embodiment evaporator 810 may comprise a conventional boiler operating as a vapor generator.

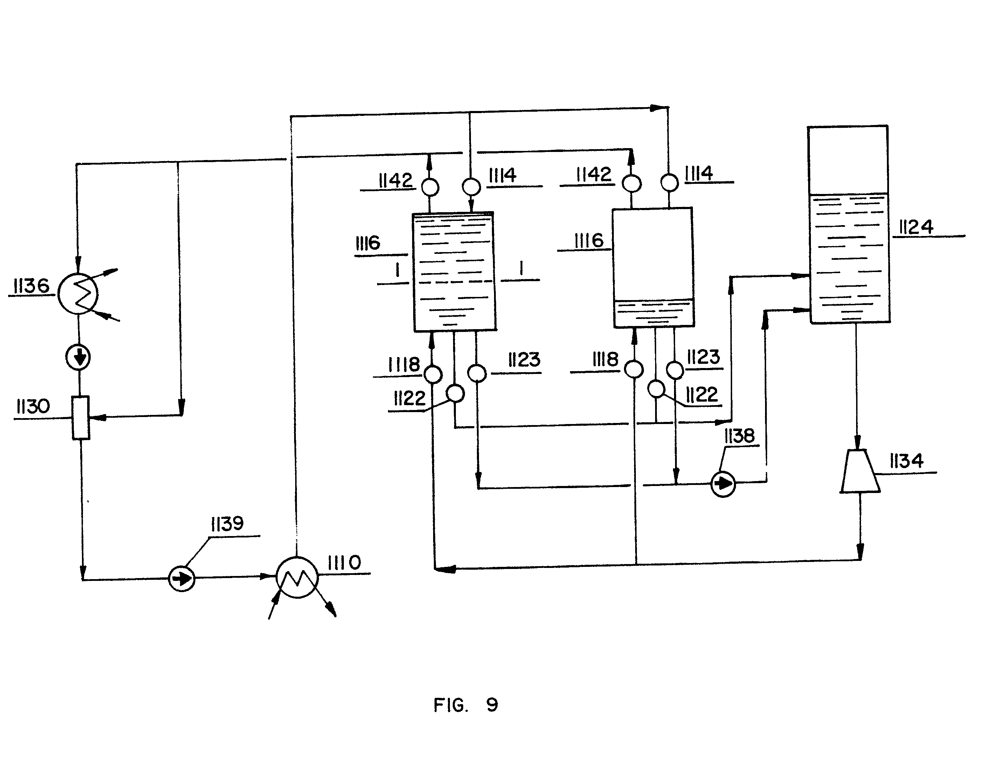

Reference is now made to Fig. 9 which illustrates a further alternative embodiment of the present invention, which is also generally similar to the embodiment of Fig. 4 but employs a pump for removing the remainder of the working fluid from the work pressure chambers.

Vapor of a vaporizable liquid such as a low boiling point fluid is provided by an evaporator 1110 and supplied via a conduit 1111 and respective valves 1114 to work pressure vessels 1116. Working fluid is supplied to the work pressure vessels 1116 via respective valves 1118 from the outlet of a fluid driven machine 1134. A working fluid outlet is provided via valves 1122 associated with each work pressure vessel 1116 and communicates with a pressure reservoir 1124 which provides a pressurized working fluid output to fluid driven machine 1134. A vapor outlet is provided via valves 1142 associated with each work pressure vessel 1116 and communicates with a condenser 1136 whose output is circulated by a pump 1137 and a heat exchanger 1130 in which the condensate is heated by hot vapors. The output of heat exchanger 1130 is supplied by a pump 1139 to evaporator 1110.

It is a particular feature of the illustrated embodiment that a second, pump driven working fluid outlet is provided via respective valves 1123 and communicates via a conduit 1125 and pump 1138 with reservoir 1124.

The operation of the apparatus of Fig. 9 will now be described. Generally speaking, it is noted that the work pressure vessels 1116 operate in out-of-phase relationship. When either of the work pressure vessels 1116 receives a supply of vapors from evaporator 1110, the working fluid is forced out via valve 1122 down to a level indicated as 1 - 1. A suitable sensor (not shown) detects when the working fluid is down to level 1-1 and causes valves 1122 and 1114 to be closed. Valve 1123 is simultaneously opened and the remaining working fluid from vessel 1116 is drained by means of regulated pump 1138, and supplied to reservoir 1124. Thereafter valve 1142 and valve 1118 are opened and the entry of working fluid causes the vapors to be forced out of the work pressure vessel 1116 and to be supplied to condenser 1136.

The provision of pump 1138 enables less vapor to be used for removing the working fluid than in other embodiments described hereinabove. The energy required for operation of pump 1138 is more than realized by the latent heat recovered by enhanced expansion of the vapor in work pressure vessel 1116 upon removal of the working liquid.

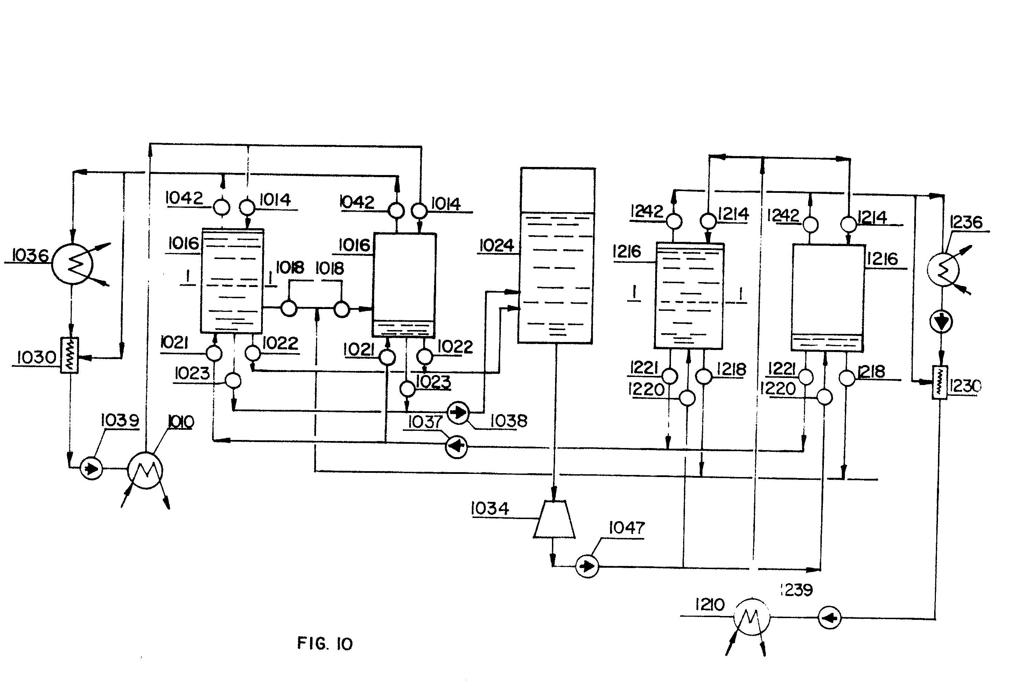

Reference is now made to Fig. 10 which illustrates two-stage apparatus based on the principle of operation of the embodiment of Fig. 9. Except as specifically described hereinabove, each of the two stages is identical to the apparatus described in Fig.9. For convenience, the first stage is outlined and indicated by reference numeral 1000, while the second stage is outlined and indicated by reference numeral 1200. The elements of stage one which are identical to those in the apparatus of Fig. 9 are indicated by numbers having the prefix 10 and the same last two digits as the numbers of corresponding elements in Fig. 9. Similarly the elements of stage two use the same last two digits and the prefix 12.

Beginning with the stage one apparatus it is seen that in distinction to the apparatus of Fig. 9, the output of the fluid driven machine 1034 is supplied by means of a pump 1047 to the work pressure vessels 1216 of stage two. Also the working fluid outputs of work pressure vessels 1216 of stage two are supplied back to the work pressure vessels 1016 of stage one instead of driving a separate fluid driven machine. A pump 1037 draws the working fluid via valves 1221 of work pressure vessels 1216 and supplies it via valves 1021 to work pressure vessels 1016.

It is appreciated that vessels 1216 work at lower temperatures and pressures than vessels 1016 and thus use energy which would otherwise be wasted. This energy is utilized in the form of pressurized working fluid which adds to the energy output of the first stage.

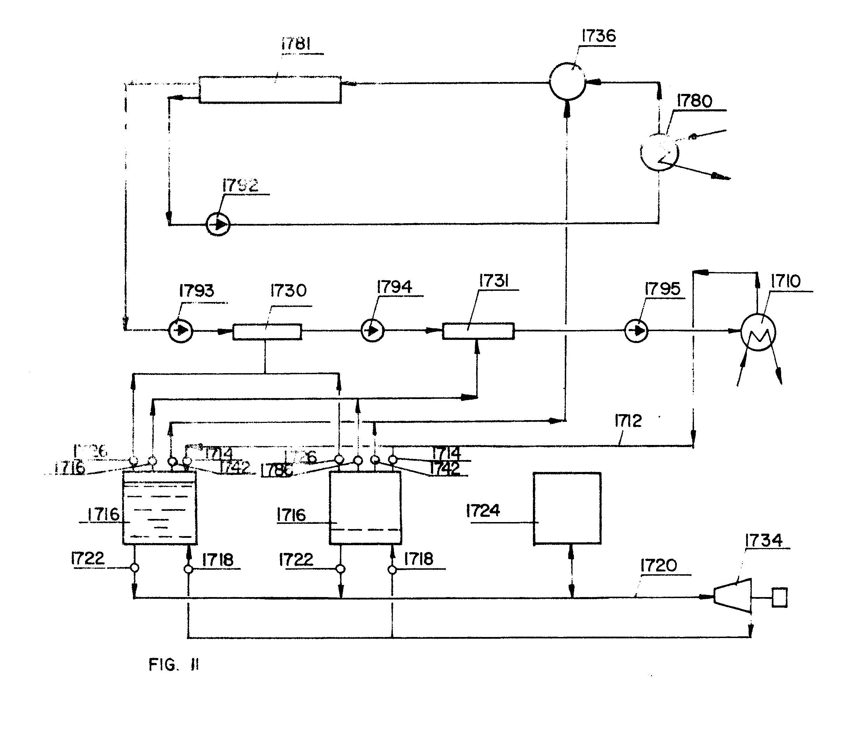

Reference is now made to Fig. 11 which illustrates apparatus for utilizing low grade energy constructed and operative in accordance with a preferred embodiment of the present invention and including an evaporator 1710 which receives a supply of a fluid having a low boiling point, such as FREON (R). In accordance with a preferred embodiment of the invention, the low boiling point fluid is preheated as will be described hereinafter. The evaporator 1710 may be a direct contact evaporator where wherein water or any other fluid, typically heated by a low grade energy source, such as solar energy, is directly contacted with the low boiling point fluid.

The vaporized fluid from evaporator 1710 is supplied via suitable conduits 1712 and via valves 1714 to one of two work pressure vessels 1716. In the illustration of Fig. 11, only two work pressure vessels and associated valves are shown, it being appreciated that any desired number of such vessels may be employed. Work pressure vessels 1716 typically comprise sealed tanks of pressure resistant construction.

Each of work pressure vessels 1716 also receives, via a valve 1718 a supply of a working fluid, such as water or a water based solution, from the output of a hydrogenerator 1734. Each of the work pressure vessels 1716 communicates via respective valves 1722 with a fluid flow pathway 1720 which leads to hydroturbine 1734. Fluid flow pathway 1720 also communicates with a receiving accumulator 1724. The working fluid is forced out of the respective work pressure vessels by the pressure of the vaporized low boiling point fluid supplied thereto and thus drives hydroturbine 174 to provide a useful mechanical output. Receiving accumulator 1724 provides smoothing out of the supply of pressurized working fluid driving the hydroturbine 1734 over the respective out of phase cycles of the individual work pressure vessels 1716.

The remainder of the apparatus of Fig. 11 will be described in the context of a description of its operation, for enhanced clarity.

Vaporized low boiling point fluid from evaporator 1710 is supplied via conduit 1712 to a work pressure vessel 1716 which is filled with water, by suitable opening of the valve 1714 of that work pressure vessel. ( For ease of understanding, one may consider the left hand pressure vessel in Fig. 11 to be the one presently receiving the vaporized low boiling point fluid.) The entry of the vaporized low boiling point fluid forces the working fluid out of the work pressure vessel via valve 1722 and into the fluid flow pathway 1720 for driving of the hydroturbine 1734.

The output of the hydroturbine 1734 is supplied to a second work pressure vessel 1716 (here, the right hand pressure vessel) via valve 1718. As the working fluid enters the second work pressure vessel 1716 it forces low boiling point fluid vapor out of the work pressure vessel via a valve 1742 to a direct contact condenser 1736. Condenser 1736 receives a cooling fluid, such as water from a heat exchanger 1780, such as a cooling tower.

The output from condenser 1736 is a mixture of low boiling point fluid and water. This output is supplied to a separator 1781 which provides a water output via a circulating pump 1792 to heat exchanger 1780. Separator 1781 also provides an output of low boiling point liquid via a circulating pump 1793 to a first heat exchanger 1730, preferably a direct contact heat exchanger which receives a low boiling point vapor output from a work pressure vessel 1716 via a valve 1726. The direct contact of the low boiling point fluid vapor with the liquid low boiling point fluid produces condensation of the low boiling point fluid vapor and preheating of the low boiling point liquid to a temperature determined by the pressure produced by circulating pump 1793.

Downstream of heat exchanger 1730, a second circulating pump 1794 forces the preheated low boiling point liquid to a second heat exchanger 1731 which receives low boiling point fluid vapor from a work pressure vessel 1716 via a valve 1786. The directed contact between the vapor and the liquid in heat exchanger 1731 produces condensation of the vapor and further heating of the low boiling point liquid to a temperature determined by the pressure produced by circulating pump 1794 which is higher than the pressure produced by pump 1793.

Downstream of heat exchanger 1731 is a further circulating pump 1795 which supplies the further heated low boiling point liquid to evaporator 1710, thus completing the cycle.

It will be appreciated by persons skilled in the art that the present invention is not limited to what has been particularly shown and described hereinabove. Rather the scope of the present invention is defined only by the claims which follow:

CLAIMS:

1.       Apparatus for utilizing low grade energy sources comprising:

a working fluid and a low boiling point fluid;

means for transmitting heat to at least one of said working fluid and said low boiling point fluid from a low grade energy source;

work pressure generating means for providing a pressurized flow of working fluid by vaporization of said low boiling point fluid;

fluid driven machine means for producing a useful energy output;

a fluid flow pathway extending from said work pressure generating means to said fluid driven machine means;

valve means operative to govern the supply of said pressurized flow of working fluid to said fluid flow pathway in a pulsed mode of operation; and

means for condensing said low boiling point fluid including first means for condensing a first portion of said low boiling point fluid and second means for contacting said first portion of said low boiling point fluid after condensation thereof with a second portion of said low boiling point fluid.

2.       Apparatus according to claim 1 and also comprising third means for contacting said second portion after condensation thereof with a third portion of said low boiling point fluid for condensation thereof.

3.       Apparatus according to claim 1, and wherein said fluid flow pathway comprises a pressurized connection between said work pressure generating means and said fluid driven machine means.

4.       Apparatus according to claim 1 and wherein said fluid flow pathway extends from a lower location to a higher location and wherein said apparatus also comprises separating means associated with the fluid flow pathway at said higher location for separating said low boiling point fluid vapor from said working fluid and permitting said working fluid to fall from said higher location into driving engagement with said fluid driven machine means.

5. Apparatus according to any of claims 1 - 3 and wherein said heat transmitting means is operative to heat said low boiling point fluid and said work pressure generating means comprises means for supplying said low boiling point fluid in a vaporized state to the working fluid.

6. Apparatus according to any of claims 1 - 3 and wherein said heat transmitting means is operative to head said working fluid and said work pressure generating means comprises means for supplying said low boiling point fluid in a liquid state to said heated working fluid.

7. Apparatus according to any of claims 1 - 3 and wherein said generating means comprises a plurality of work pressure generating vessels arranged for operating in pulsed, discontinuous, out of phase sequence .

8. Apparatus according to claim 6 and wherein said plurality of pressure generating vessels provide a substantially continuous flow of working fluid engaging said machine means for uniform and continuous operation thereof.

9. Apparatus according to claim 6 and also comprising pressurized working fluid reservoir means for maintaining a generally constant driving fluid pressure at said fluid driven machine means.

10. Apparatus according to any of claims 1 - 3 and also comprising control means for operating said valve means in a predetermined sequence.

11. Apparatus according to claim 9 and wherein said control means comprise clock means for operating said valve means in accordance with a predetermined time sequence.

12. Apparatus according to any of claims 1-3 and wherein said valve means comprises pressure sensor means operative to release pressurized working fluid from said generating means to said fluid flow pathway in response to exceedence of a chosen threshold pressure at said generating means.

13.     Apparatus according to claim 3 and wherein said fluid flow pathway is maintained under positive pressure during operation.

14.     Apparatus according to claim 7 and also comprising ejector means having a drive input receiving a low boiling point fluid from said heat transmitting means and having a suction input receiving low boiling point fluid from a first generating vessel, said ejector means providing an output to a second generating vessel.

15.     Apparatus according to claim 1 and also comprising means for cooling said working fluid while heating thereby low boiling point fluid condensate received from said condensing means.

16.     Apparatus according to claim 1 and wherein said valve means is operative in response to at least one operating parameter of said vessel.

17.     Apparatus according to claim 7 and also comprising heat exchanger means operative to heat low boiling point fluid to be supplied to a pressure generating vessel using heat from vapors of low boiling point fluid from another pressure generating vessel.

18.     Apparatus according to claim 13 and also comprising a detender receiving low boiling point vapors from said generating means and being operative to produce electricity.

19.     Apparatus according to claim 1 and wherein said heat transmitting means comprises a plurality of heat exchangers serially connected to a source of heat derived  from solar radiation or waste heat, a plurality of evaporators, each operated in a closed circuit with a corresponding heat exchanger, said plurality of evaporators operating at different work pressures, and ejector means receiving a driving input from an evaporator having a higher work pressure and receiving a suction input from an evaporator having a lower work pressure, said ejector providing a pressurized vapor output to said generating means.

20.     Apparatus according to claim 7 and also

0082101

- 22 -

comprising ejector means receiving pressurized working fluid as a driving input from a first vessel, receiving a suction input from a second vessel and providing an output to said fluid flow pathway.

21. Apparatus according to claim 1 and also comprising:

a second working fluid and a second low boiling point fluid;

second means for transmitting heat to at least one of said second working fluid and said second low boiling point fluid from a low grade energy source;

second work pressure generating means for providing a pressurized flow of said second work fluid by vaporization of said second low boiling point fluid;

second fluid driven machine means for producing a useful energy output;

a second fluid flow pathway extending from said second work pressure generating means to said second fluid driven machine means;

second valve means operative to govern the supply of said pressurized flow of second working fluid to said second fluid flow pathway in a pulsed mode of operation; and

second means for condensing said second low boiling point fluid; and wherein

said second means for transmitting heat comprises heat exchanger means combined with said means for condensing, whereby heat from said low boiling point fluid is transferred to at least one of said second working fluid and said second low boiling point fluid.

22. Apparatus according to claim 1 and wherein said working fluid comprises a liquid conductor and said fluid driven machine means comprises means for producing electricity from movement of the liquid conductor.

23. Apparatus according to claim 7 and also comprising pump means receiving pressurized working fluid from a first and a second vessel and providing an output to said fluid flow pathway.

24.     Apparatus for utilizing low grade energy sources comprising:

a working fluid and a vaporizable fluid;

means for heating at least one of said working fluid and said vaporizable fluid using low grade energy sources;

work pressure generating means for providing a pressurized flow of working fluid by vaporization of said vaporizable fluid;

fluid driven machine means for producing a useful energy output;

a fluid flow pathway extending from said work pressure generating means to said fluid driven machine means;

valve means operative to  govern the supply of said pressurized flow of working fluid to said fluid flow pathway  whereby the amount of working fluid supplied to said fluid flow pathway  is equal in volume to the volume of vapor provided in said work pressure generating means; and

means for condensing said vaporizable fluid.

25.     Apparatus according to claim 24 and wherein said fluid drive machine means comprises a hydraulic machine.

26.     Apparatus according to either of claims 24 and 25 and also comprising vapor driven machine means for producing an energy output from said vaporizable fluid when in a vaporized state.

27.     Apparatus according to any of claims 24 -26 and wherein said vaporizable fluid comprises a low boiling point fluid.

28.     Apparatus according to any of claims 24 -27 and wherein said valve means is operative to supply said working fluid and said vaporizable fluid under pressure to said fluid flow pathway in pulsed, discontinuous sequence.

29.     Apparatus according to any of the preceeding claims and also comprising pump means for drawing part of said working fluid from said work pressure generating means and supplying it to said fluid flow pathway.

30. Apparatus for utilizing low grade or high grade energy sources comprising:

a working fluid and a vaporizable fluid;

means for heating at least one of said working fluid and said vaporizable fluid using low grade or high grade energy sources;

work pressure generating means for providing a pressurized flow of working fluid by vaporization of said vaporizable fluid;

fluid driven machine means for producing a useful energy output from said pressurized flow of working fluid;

a fluid flow pathway extending from said work pressure generating means to said fluid driven machine means;

vapor driven machine means operative to govern the supply of said pressurized flow of working fluid to said fluid flow pathway whereby the amount of working fluid supplied to said fluid flow pathway is equal in volume to the volume of vapor provided in said work pressure generating means; and

means for condensing said vaporizable fluid.

31. Apparatus according to claim 30 and wherein said fluid driven machine means comprises a hydraulic turbine.

32. Apparatus according to claim 29 and wherein said fluid driven machine means comprises a magnetohydrodynamic generator employing a liquid conductor to generate electricity.

FIG. I

FIG. 2

76 58 59 50 58 60 59 62 54 64 68 66 54 58 59 60 50 74 70 72

0082101

WORKING CYCLE OF THE SYSTEM

FIG. 3

FIG. 4

FIG. 5

0082101

FIG. 6

FIG. 7

FIG. 8

0082101

FIG. 9

FIG. 10

FIG. 11